# EUROPÄISCHE PATENTANMELDUNG

(11) **EP 1 643 578 A2**
(43) Veröffentlichungstag der Anmeldung: **05.04.2006**
(21) Anmeldenummer: 05015823.7
(22) Anmeldetag: 21.07.2005
(51) Int. Cl.: H01M 8/10, H01M 4/86, H01M 4/88, H01M 4/90

(54) **Verfahren zur Beschichtung einer Membran mit Katalysator**

(30) Priorität: 28.08.2004 DE 102004041782
(71) Anmelder: Forschungszentrum Jülich GmbH, 52425 Jülich (DE)
(72) Erfinder: Stähler, Markus, 52349 Düren (DE)

(57) **Zusammenfassung**

Die Erfindung betrifft ein Verfahren zum Beschichten einer Membran mit Katalysator, bei dem eine den Katalysator aufweisende Suspension auf die Membran aufgebracht wird. Es wird eine Suspension eingesetzt, die wenigstens ein unpolares Lösungsmittel umfasst, welches ein permanentes Dipolmoment im Bereich von µ_{elektrisch} ≤ 0,5 Debye aufweist. Vorteilhaft weist die Suspension dieses unpolare Lösungsmittel mit einem Anteil von mindestens 90 Vol.-% auf.

Als unpolare Lösungsmittel sind insbesondere Benzol, Toluol und/oder ortho, meta oder para-Xylol geeignet.

Als besonders geeignet haben sich Suspensionen herausgestellt, die neben dem unpolaren Lösungsmittel Methanol und/oder Propanol mit einem Anteil von bis zu 10 Vol.-% aufweisen.

## Beschreibung

Die Erfindung betrifft ein Verfahren zur Beschichtung einer Membran mit Katalysator, insbesondere die Beschichtung einer Elektrolytmembran einer Brennstoffzelle.

### Stand der Technik

Aus der Literatur sind katalysatorbeschichtete Elektrolytmembranen, sogenannte CCMs (catalyst coated membranes) bekannt, die für den Einsatz in Brennstoffzellen geeignet sind. Von großem Interesse sind insbesondere homogene und möglichst rissfrei aufgebrachte Katalysatorschichten auf einer Membran.

Bei den bisherigen Verfahren stellt man die Katalysatordispersion mit polaren Dispersionsmitteln her. Steht der zu verwendende Katalysator bereits fest, dann können die Dispersionseigenschaften wie Viskosität, Oberflächenspannung oder das Vermögen eine Polymermembran zu quellen usw. nur noch durch die physikalischen Eigenschaften des Dispersionsmittels verändert werden.

Bei der Direktbeschichtung von Elektrolytmembranen geht man bisher so vor, dass die Membran, in trockenem Zustand oder mit polaren Lösungsmitteln vorgequollen, mit einer Suspension aus Katalysator, Nafion® -Lösung und polaren Dispersionsmittel besprüht wird. In jedem Fall tritt somit Dispersionsmittel in die Membran ein und quillt diese nachteilig auf.

Um mit der Sprühtechnik reproduzierbare Ergebnisse in der Qualität der aufgetragenen Schicht zu erhalten sind regelmäßig konstante klimatische Bedingungen erforderlich. Bei zu trockener Umgebungsluft kann sich die Schicht schon beim Aufsprühen wieder ablösen, während bei zu feuchter Luft das Lösungsmittel nur sehr langsam verdampft. Findet der Verdampfungsprozess des Lösungsmittels ausschließlich in der Katalysatorschicht statt, verdampft also beim Sprühprozess zu wenig, oder wird die Dispersion direkt auf die Membran gegeben, dann quillt das polare Dispersionsmittel die Membran anisotrop auf. Die Membran erhält dabei ein welliges Profil, auf dem eine Beschichtung nur dann möglich ist, wenn gleichzeitig die-Membran nachgespannt wird, oder man wartet bis das Dispersionsmittel verdampft und die Membran wieder entquollen ist. Beim Nachspannen kann die Membran, insbesondere wenn sie sehr dünn ist, reißen während beim Entquellen, je nach Schichtdicken und benutzten Dispersionsmitteln, die Katalysatorschicht Risse bekommt.

Alternativ zum vorgenannten Sprühverfahren ist auch noch das DLR-Verfahren zur Herstellung von Elektroden Membran Einheiten bekannt. Bei der Herstellung von PEFC Elektroden-Membran-Einheiten (EME) ist es notwendig, dünne Reaktionsschichten aufzubringen. Diese Schichten mit einer typischen Schichtdicke zwischen 5 und 10 µm werden mit einer Beschichtungsanlage direkt auf die Elektrolyt-Membran aufgesprüht. In einem zweiten Prozessschritt werden die Elektroden dann zusammen mit der Membran zu einem festen Verbund verwalzt. Als Endprodukt steht die fertige EME zur Verfügung. Die Vorteile des DLR-Verfahrens sind
● Lösungsmittelfreie, trockene Elektrodenherstellung
● Kontinuierlicher Prozess für die Herstellung der Elektroden-Membran-Einheit

### Aufgabe und Lösung

Aufgabe der Erfindung ist es, ein Verfahren zum Beschichten von Membranen, insbesondere Elektrolytmembranen mit Katalysator zur Verfügung zu stellen, die eine Rissbildung der aufgebrachten Katalysatorschicht weitgehend vermeidet.

Die Aufgabe der Erfindung wird gelöst durch ein Verfahren mit der Gesamtheit an Merkmalen gemäß Hauptanspruch. Vorteilhafte Ausgestaltungen des Verfahrens finden sich in den darauf rückbezogenen Ansprüchen.

### Gegenstand der Erfindung

Die Erfindung ermöglicht die Direktbeschichtung von Polymerelektrolytmembranen mit Katalysatorsuspensionen ohne die üblicherweise auftretende Quellung der Membran bei Kontakt mit dem eingesetzten Dispersionsmittel.
Beim Quellvorgang werden Dispersionsmittelmoleküle in das Membranmaterial eingelagert und vergrößern somit das Volumen und das Gewicht der Membran. Die Stärke des Quellprozesses lässt sich durch die Gewichtszunahme der Membran bei Dispersionsmittelkontakt beschreiben.

Bei den standardmäßig benutzten Dispersionsmitteln beträgt die relative Gewichtszunahme bis zu 200 %.

Die Einlagerung von Dispersionsmittelmolekülen kann deutlich verringert werden, wenn solche Dispersionsmittel verwendet werden, die ein sehr geringes, permanentes, elektrisches Dipolmoment haben. Dies sind insbesondere sogenannte unpolare, vorteilhaft aromatische Dispersionsmittel. Die permanenten Dipolmomente der Dispersionsmittel die beim Standardverfahren eingesetzt werden liegen üblicherweise im Bereich Lelektrisch ≈ 3 - 1,5 Debye, während die im Rahmen dieser Erfindung eingesetzten unpolaren, insbesondere aromatischen Dispersionsmittel in der Regel im Bereich µelektrisch ≈ 0,5 - 0 Debye liegen.

Für den Einsatz in dem erfindungsgemäßen Verfahren haben sich insbesondere aromatische Dispersionsmittel mit einem geringen, permanenten Dipolmoment als besonders geeignet herausgestellt.

Vorteilhaft kann über geringe Anteile von polaren Lösungsmitteln im unpolaren, aromatischen Dispersionsmittel zudem die Stärke der Wechselwirkungen zwischen den dispergierten Teilchen und dem Dispersionsmittel eingestellt werden. Die wesentliche Neuerung bei dem erfindungsgemäßen Verfahren ist, dass hier von einem unpolaren Dispersionsmittel ausgehend die physikalischen Eigenschaften der Dispersion in ganz anderen Bereichen als bislang möglich variiert werden können.

Üblicherweise wird aus dem Katalysator, der Nafion® -Lösung und unterschiedlichen polaren Lösungsmittel in mehreren Schritten eine Suspension hergestellt und diese dann auf die gequollene oder trockene Membran durch Sprühen oder Rakeln aufgetragen.

Gemäß der Erfindung wird zunächst ebenfalls eine solche Suspension hergestellt, diese dann aber getrocknet. Alternativ kann auch Nafion® -Pulver mit Katalysatorpulver trocken vermischt werden. Das so erhaltene Katalysator-Nafion® -Pulver wird bis auf die gewünschte Größe zerkleinert und dann in dem erfindungsgemäßen Dispersionsmittelgemisch dispergiert. Diese Dispersion kann dann vorteilhaft direkt auf eine trockene Membran gegeben, bzw. gegossen und getrocknet werden.

Als unpolare Dispergiermittel haben sich aromatische Flüssigkeiten wie Benzol, Toluol und Xylole als gut geeignet herausgestellt. Als Katalysator sind geträgerte Platin oder Platin-Ruthenium-Katalysatoren zu nennen. Unter einem geringen Zusatz im Sinne dieser Erfindung ist ein Anteil von bis zu 10 Vol.-% bezogen auf die gesamte Lösungsmittelmenge zu verstehen. Geeignete polare Lösungsmittelzusätze sind beispielsweise kurzkettige Alkohole wie Methanol oder Propanol.

Die erfindungsgemäße Methode bietet den Vorteil, dass man über die Anteile an polaren und unpolaren Dispersionsmittel einen Einfluss auf die Stärke der Membranquellung und der Wechselwirkung zwischen dispergierten Stoff und Dispersionsmittel hat. Eigenschaften der Schicht, wie beispielsweise die Rissbildung beim Trocknungsprozess, lassen sich so in weiten Bereichen steuern.

Ein besonderer Vorteil des erfindungsgemäßen Verfahrens liegt insbesondere darin, Polymermembranen für Brennstoffzellenanwendungen direkt, dass bedeutet ohne den bislang üblichen begleitenden Quellprozess, zu beschichten.
Mit dem angesprochenen Verfahren wurden bis jetzt bis zu 100 µm dicke Katalysatorschichten in einem Schritt erzeugt.

### Spezieller Beschreibungsteil

Nachfolgend wird der Gegenstand der Erfindung näher erläutert, ohne dass der Gegenstand der Erfindung dadurch beschränkt wird.

Als Ausführungsbeispiel sei hier die Kombination von Toluol, als unpolares Dispersionsmittel, mit Methanol, als polares Dispersionsmittel genannt. Das oben bereits erwähnte Pulvergemisch aus Nafion® und Katalysator erhält man wie folgt:
i) Der geträgerte oder ungeträgerte Katalysator wird in einem Gemisch aus Wasser, Alkoholen und Nafion® -Lösung dispergiert (sogenanntes Standardverfahren).
ii) Anschließend wird diese Dispersion getrocknet und dabei von allen Dispersionsmitteln befreit. Das erhaltene Pulver kann mit unterschiedlichen Verfahren, z. B. durch Mörsern, zerkleinert werden.
iii) Danach wird Toluol mit bis zu 10 Vol.-% Methanol vermischt. Der Anteil an polaren Dispersionsmittel hängt stark von dem verwendeten Katalysator, dem Nafion®⁻Anteil usw. ab und muss für neue Katalysator-Nafion®⁻Mischungen neu ermittelt werden.
   Grundsätzlich gilt: Mit hohen Anteilen an polaren Dispersionsmittel werden die Dispersionen stabiler und lassen sich besser verteilen, aber die Membran quillt stärker und beim Trocknungsprozess entstehen mehr Risse. Verringert man den Anteil polarer Dispersionsmittel dann wird die Dispersion instabiler und die Schichten inhomogener, aber die Membran quillt nicht mehr so stark. Eine optimale Zusammensetzung kann anwendungsbezogen leicht anhand einiger Testreihen ermittelt werden.
iv) In der gewählten Mischung von Toluol und Methanol wird das Nafion® -Katalysatorpulver fein verteilt. Die erhaltene Dispersion wird dann direkt auf die Membran aufgebracht.
   Sofern dies durch Rakeln erfolgt, sollte die Viskosität entsprechend hoch sein. Hierfür eignet sich insbesondere ein größerer Anteil an polaren Dispersionsmittel in der Suspension. Die dadurch hervorgerufene geringfügige Quellung der Membran kann man durch Fixierung der Membran auf einer Unterlage, z. B. durch einen Vakuumtisch, kontrollieren. Diese Möglichkeit besteht aber nur wenn die Quellung im Vergleich zu rein polaren Dispersionsmitteln, gering, d. h. unter 20% Gewichtszunahme, bleibt.

Mit dem erfindungsgemäßen Verfahren ist es möglich, die Membranquellung, im Vergleich mit dem Verfahren, welches Standarddispersionsmittel benutzt, um den Faktor 10 zu verringern. Hierdurch ergibt sich für die Auftragung auf die Membran eine völlig neue Möglichkeit:

Man wählt die Zusammensetzung der Dispersion so, dass diese sehr dünnflüssig ist, z. B. durch einen sehr großen unpolaren Dispersionsmittelanteil. Auf die Membran presst man dann eine Schablone, welche die zu beschichtende Fläche bildet und das Zerfließen des Dispersionsmittels begrenzt. Anschließend gießt man die dünnflüssige Dispersion in die Schablone innerhalb derer sie sich verteilt und lässt dann das Dispersionsmittel langsam verdampfen. Diese Methode bietet den Vorteil, dass sich die Flüssigkeit gleichmäßig verteilt und nach dem Verdampfen des Dispersionsmittels eine sehr homogene Schicht zurückbleibt. Die bei dem Standardverfahren übliche Verteilung der Dispersion durch Rakeln oder Sprühen übernimmt bei diesem Verfahren die Hydrostatik, kein Werkzeug.

Man kann so über die Dispersionsmittelanteile gezielt die Wechselwirkungsanteile mit dem dispergierten Stoff und der Membran beeinflussen. Dies bedeutet, dass sich durch die Kombination der Dispersionsmitteleigenschaften die erhaltenen Pasten bzw. Dispersionen vorteilhaft in einer Weise manipulieren lassen, wie es mit rein polaren Substanzen bislang nicht möglich ist.

Eine Quellung der Membran kann zwar nie ganz verhindert werden, aber durch den erfindungsgemäßen Einsatz von unpolaren Lösungsmitteln mit einem hohen Volumenanteil, kann die Quellung vorteilhaft derart verringert werden, dass neue Beschichtungsverfahren entwickelt werden können.

## Patentansprüche

1. Verfahren zum Beschichten einer Membran mit Katalysator, bei dem eine den Katalysator aufweisende Suspension auf die Membran aufgebracht wird, **dadurch gekennzeichnet, dass** eine Suspension eingesetzt wird, die wenigstens ein unpolares Lösungsmittel umfasst, welches ein permanentes Dipolmoment im Bereich von µelektrisch ≤ 0,5 Debye aufweist.

2. Verfahren nach vorhergehendem Anspruch 1, bei dem eine Suspension eingesetzt wird, die das unpolare Lösungsmittel in einem Anteil von 90 Vol.-% oder mehr, insbesondere von mehr als 95 Vol.-%, und ganz besonders von mehr als 98 Vol.-% aufweist.

3. Verfahren nach einem der Ansprüche 1 bis 2,
bei dem ein aromatisches Lösungsmittel als unpolares Lösungsmittel eingesetzt wird.

4. Verfahren nach einem der Ansprüche 1 bis 3,
bei dem Benzol, Toluol und/oder ortho, meta oder para-Xylol als unpolares Lösungsmittel eingesetzt wird.

5. Verfahren nach einem der Ansprüche 1 bis 4,
bei dem die Suspension Methanol und/oder Propanol mit einem Anteil von bis zu 10 Vol.-% aufweist.

6. Verfahren nach einem der vorhergehenden Ansprüche bei dem zunächst eine Katalysator-Nafion®⁻Mischung in einem polaren Lösungsmittel hergestellt wird, diese Mischung getrocknet wird, und anschließend mit der getrockneten Mischung und wenigstens einem unpolares Lösungsmittel die Suspension gemäß einem der Ansprüche 1 bis 5 hergestellt wird.
